## Europäisches Patentamt
## European Patent Office
## Office européen des brevets

(19)

(11) Numéro de publication: **0 118 453**
**B1**

(12) # FASCICULE DE BREVET EUROPÉEN

(45) Date de publication du fascicule du brevet:
08.03.89

(51) Int. Cl.⁴: **F 24 J 2/34**

(21) Numéro de dépôt: **83901890.0**

(22) Date de dépôt: **21.06.83**

(86) Numéro de dépôt international:
**PCT/BE 83/00013**

(87) Numéro de publication internationale:
**WO 84/00205 (19.01.84 Gazette 84/02)**

(54) **CAPTEUR SOLAIRE A HAUT RENDEMENT.**

(30) Priorité: **22.06.82 BE 1010538**
**03.02.83 BE 1010713**
**22.03.83 BE 1010742**

(43) Date de publication de la demande:
**19.09.84 Bulletin 84/38**

(45) Mention de la délivrance du brevet:
**08.03.89 Bulletin 89/10**

(84) Etats contractants désignés:
**AT CH DE FR GB LI LU NL SE**

(56) Documents cité:
**EP-A-0 027 773**
**EP-A-0 032 882**
**CH-A-580 735**
**DE-A-2 712 310**
**FR-A-2 379 778**
**GB-A-2 069 023**
**US-A-4 281 637**

(73) Titulaire: **VAN MASSENHOVE, Francis, Chemin du Cornet d'En Haut, 30, B-7781 Houthem (BE)**

(72) Inventeur: **VAN MASSENHOVE, Francis, Chemin du Cornet d'En Haut, 30, B-7781 Houthem (BE)**

(74) Mandataire: **Dopchie, Jean- Marc, KORTRIJKS OCTROOI- EN MERKENBUREAU - K.O.B. Kennedypark 21c, B-8500 Kortrijk (BE)**

LIBER, STOCKHOLM 1989

## Description

La présente invention est relative à l'exploitation de l'énergie solaire et, en particulier, à des installations destinées à capter cette énergie.

On connaît déjà par US-A-4 281 637 un capteur solaire à un seul réservoir stockeur de chaleur intégré dans une enceinte en matériau transparent. Dans cette enceinte il y a le vide d'air et le réservoir est revêtu d'un absorbeur du type "black absorbing", transférant l'énergie à l'intérieur du réservoir, où est stocké l'agent à chauffer.

Dans ce type de capteur solaire connu l'isolation thermique réalisée entre le réservoir et le vitrage est médiocre car l'absorbeur n'est pas sélectif. En effet, dans le cas d'un absorbeur du type "black absorbing" les lois de Stephan Bolzmann démontrent que le coefficient d'isolation entre le réservoir et le vitrage est supérieur à 4 Watts par degré et par m² de vitrage. Par conséquent, ce capteur solaire ne permet pas de rendement de captation ni d'exploitation excellent. En outre, ce type de capteur solaire ne permet pas de réaliser un stockage de chaleur de forme générale plate ni, par conséquent, d'être utilisé comme caisson autoportant et isolant, destiné à la construction pour toiture, paroi, etc.

L'objet de l'invention est de créer un capteur solaire à vide d'air partiel ou total, présentant l'avantage d'être de construction simple, facile à raccorder, d'un coût réduit pour une fabrication en série, d'un placement aisé, d'où économie de main d'oeuvre, tout en ayant des rendements de captation et d'exploitation excellents.

Un capteur solaire à vide d'air suivant l'invention, comportant intégré dans un carter fermé par un vitrage orienté vers le soleil au moins un réservoir accumulateur de chaleur isolé thermiquement de ce vitrage, est caractérisé en ce que au moins la surface dirigée vers le soleil de ce ou de ces réservoirs accumulateurs est sélectivement absorbante et que dans ce carter des moyens de support sont prévus qui s'étendent entre le fond dudit carter et le vitrage formant des compartiments pour ce ou ces réservoirs accumulateurs.

Suivant l'invention le traitement sélectivement absorbant ou l'absorbeur est constitué par un revêtement du réservoir accumulateur sur la partie de sa surface dirigée vers le vitrage, sous forme d'enduit sélectif, de feuille sélective ou de traitement sélectif dans la masse.

S'il s'agit d'une feuille sélective, elle peut n'être en contact avec le réservoir que sur une partie médiane de sa surface. Les autres parties (latérales) constituent alors des ailettes de captation adjacentes à la surface de captation du réservoir.

Suivant une variante de l'invention l'absorbeur est constitué par un revêtement du réservoir accumulateur sur toute sa surface sous forme d'enduit sélectif, de feuille sélective ou de traitement sélectif dans la masse, la face interne de la paroi dorsale du carter dirigée vers le réservoir ayant une forme la plus proche possible d'une surface prismatique à effet concentrateur et le réservoir étant situé dans la zone foyère de cette surface prismatique.

Dans une réalisation avantageuse de l'invention la résistance à l'écrasement de l'ensemble est réalisée par la forme du carter constituée d'alvéoles juxtaposées, de manière à ce que les matériaux ne travaillent qu'à la compression pour reprendre les seuls efforts de l'écrasement.

Suivant une autre variante, le carter fermé est constitué, d'une part, par le vitrage et, d'autre part, par un caisson associé, dont la paroi dorsale revêtue d'un absorbeur constitue la paroi côté vitrage du ou des réservoirs, le caisson ainsi constitué pouvant flotter sur l'eau d'une piscine.

Encore suivant l'invention, la densité du stockage par m² de surface du vitrage va en diminuant de l'entrée à la sortie du capteur, de manière à atteindre les températures les plus élevées à la sortie.

Pour mieux faire comprendre l'invention celle-ci est décrite maintenant sur la base des dessins annexés montrant en:

Figure 1 une coupe transversale dans un capteur solaire suivant l'invention;

Figure 2 une vue partielle en plan d'une variante de la réalisation de la figure 1;

Figures 3 et 4 respectivement une coupe par 3 - 3 et une coupe par 4 - 4 de la figure 2;

Figures 5 et 6 une autre variante de la réalisation de la figure 2;

Figures 7 et 8 une coupe respectivement par 7 - 7 de la figure 5 et par 8 - 8 de la figure 6;

Figures 9 et 10 la représentation respectivement en coupe et en plan d'une application particulière de l'invention;

Figure 11 une variante de la réalisation de la figure 9;

Figure 12 une coupe transversale dans un capteur solaire, suivant l'invention, à vide partiel;

Figure 13 une vue partielle en plan d'une variante de la figure 12;

Figure 14 une coupe transversale suivant 14 - 14 de la figure 13;

Figures 15 et 16 une variante respectivement des figures 13 et 14 et des figures 5 à 8.

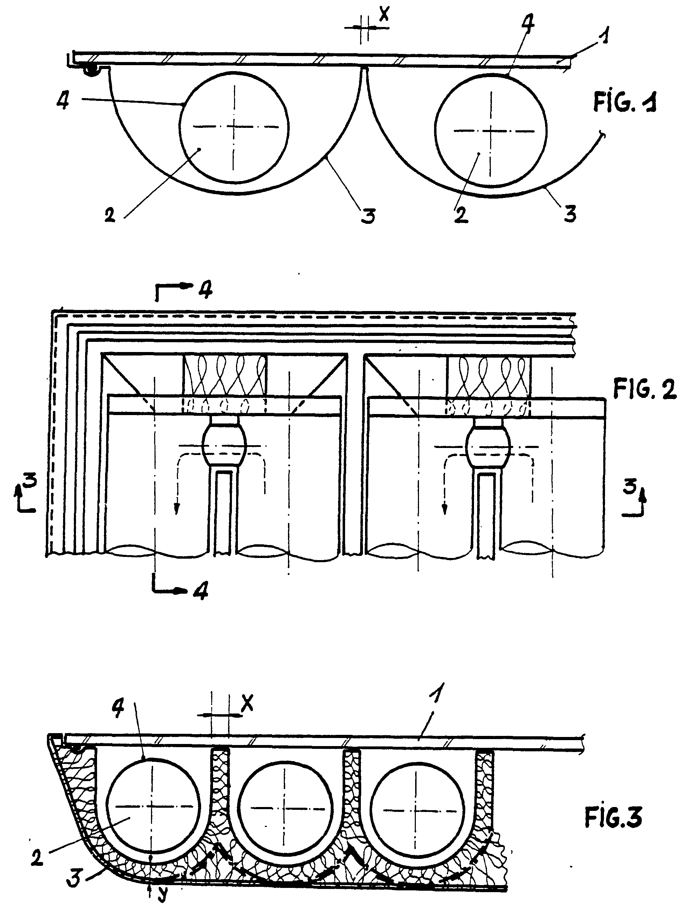

Il est à remarquer que les figures 1 à 8 à échelles différentes correspondent au cas où le vide d'air est très poussé (pression inférieure à $10^{-3}$ mmHg). La conductibilité thermique du gaz résiduel est alors très petite et les distances séparant la surface du réservoir du carter, d'une part, et du vitrage, d'autre part, peuvent être relativement petites (de l'ordre du cm) par rapport à la dimension transversale du réservoir.

Par contre, si le vide est un vide partiel (par exemple une pression inférieure ou égale à 10 mbar), il est nécessaire pour minimiser les pertes par conduction à travers le gaz que (figures 11 à 14):

1 La conductibilité du gaz résiduel soit la plus faible possible; à cet effet, le gaz résiduel est un gaz plus isolant que l'air et ce sont généralement les gaz lourds qui ont une faible conductivité, tels que les gaz chloré, iodé, sulfuré, fluoré, phosphoré, carboné ou certains gaz rares. Il faut évidemment que le gaz utilisé soit inerte chimiquement vis-à-vis des matériaux utilisés dans le carter, tels que $SO_2$.

2 Les distances séparant le réservoir de la paroi du carter, d'une part, et du vitrage, d'autre part, soient suffisantes (idéalement parlant $\geq$ 4 cm).

3 On prévoit une isolation au dos du carter.

Un capteur solaire suivant l'invention comprend un vitrage 1 (figure 1) en matériau résistant aux chocs thermiques et à la compression et totalement étanche à l'air.

Sa forme générale est plate ou gauche. On peut par exemple utiliser une vitre de verre trempé, plat et d'une épaisseur d'environ 6 mm.

Pour réaliser l'objet de l'invention il n'est pas absolument nécessaire que le capteur solaire soit plan dans sa forme générale, il peut aussi être non-plan et par exemple sphérique, cylindrique, etc. mais toujours avec mise sous vide. Dans ce cas le vitrage, le réservoir de stockage, l'absorbeur et le joint d'étanchéité ont une forme adaptée à la forme générale.

Le capteur comprend encore un certain nombre de réservoirs de stockage 2 de forme appropriée, disposés parallèlement les plus jointifs possible, en une ou plusieurs couches. Dans ces réservoirs est stocké l'agent à chauffer, air, liquide ou solide à changement de phases. La paroi des réservoirs est constituée en un matériau ayant une bonne tenue à la corrosion et parfaitement étanche à l'agent chauffant avec une résistance au passage de la chaleur faible. La face extérieure de la paroi a un coefficient d'émissivité très faible soit par son matériau lui-même, soit par un revêtement. On a représenté les réservoirs 2 connectés en série mais, bien entendu, ils peuvent être connectés en parallèle comme dans la figure 5.

S'ils sont connectés en série et si l'axe des réservoirs n'est pas horizontal, il faut prévoir des prises de purge d'air aux points hauts (si le fluide caloporteur est un liquide) où se trouve de l'air dissous. Ces prises de purge sont reliées à un collecteur unique de purge.

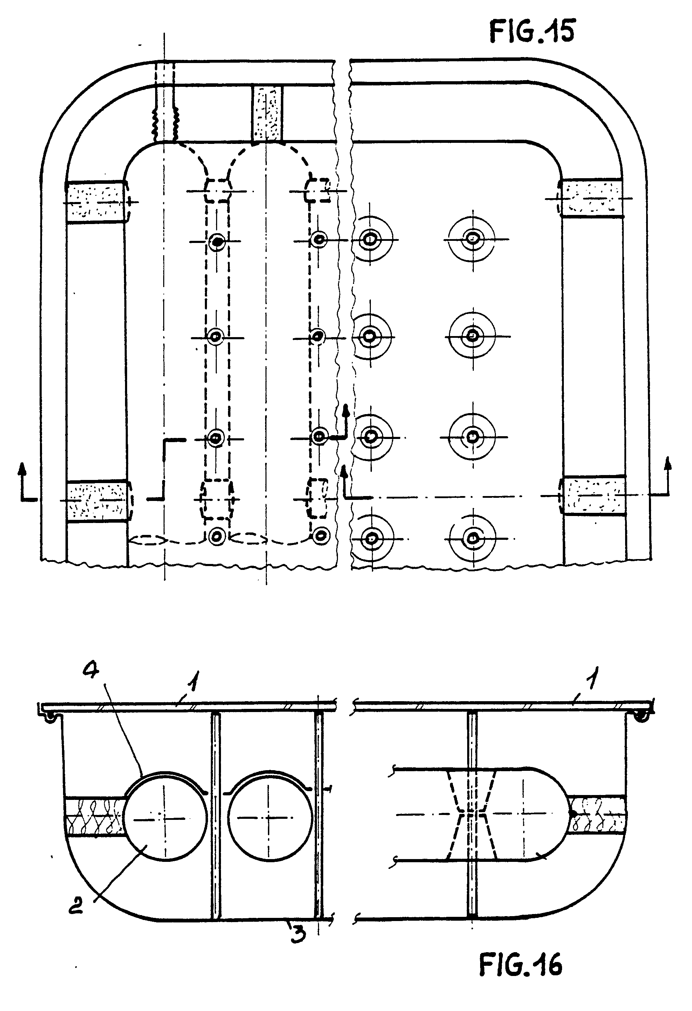

De manière à réaliser une fabrication peu coûteuse des réservoirs montés en série, il suffit d'utiliser une seule longueur de tube du diamètre du réservoir et de la cintrer à 180° à chaque extrémité du capteur. Pour réaliser le cintrage à rayon de courbure très petit il faut préalablement au cintrage réaliser un aplatissement du tube et, ainsi, aucune soudure n'est nécessaire (figure 13).

Sur les réservoirs est prévu un absorbeur constitué par un enduit sélectif ou une feuille sélective. Ce revêtement est réalisé soit sur la face extérieure des réservoirs tournée vers le vitrage, soit sur toute la face extérieure des réservoirs, le captage solaire se faisant dans ce dernier cas grâce à la réflexion sur le carter, dont question ci-après, par la face cachée des réservoirs. Comme feuille sélective on peut citer une feuille d'inox, dont la surface est de l'oxyde de chrome et de fer, ou plus généralement toute autre feuille de matériau de faible émissivité (aluminium, cuivre, zinc, nickel,...) recouverte d'une couche très absorbante, comme l'oxyde de chrome ou l'oxyde de zinc, aux radiations solaires et transparente aux radiations infrarouges, ou encore une fine feuille de cuivre électrolytique recouverte de dendrites.

Le capteur comprend un carter 3 de forme générale telle qu'elle englobe l'ensemble vitrage 1 et réservoirs 2 sans points de contact avec lesdits réservoirs. Ce carter doit garantir une étanchéité absolue à l'intérieur et on y fait le vide le plus poussé possible ou le vide partiel (idéalement parlant: pression résiduelle inférieure à 5 mbar), le résidu d'air pouvant être remplacé par un gaz plus isolant que l'air. Le carter est en un matériau totalement étanche à l'air aux températures utilisées et résistant à la corrosion extérieure. Le vitrage 1 vient se poser contre le carter par l'intermédiaire d'un joint en garantissant une étanchéité absolue et en permettant une dilatation différentielle vitrage-carter. Si la longueur du capteur est telle que le joint élastique ne parvient plus à reprendre la dilatation différentielle, il faut soit prévoir une disposition serpentante de ce joint sur le bord du carter, soit aménager des lyres de dilatation dans le joint à intervalles réguliers. Il est évident que si le carter est en même matériau que le vitrage, il peut alors être soudé sans joint de dilatation différentielle. Le carter ne se déforme quasi pas sous l'action de la poussée extérieure grâce à sa forme en alvéoles, entourant chaque réservoir et s'appuyant sur le vitrage entre chaque réservoir avec une épaisseur plus ou moins constante. Ainsi, le matériau utilisé travaille presque complètement à la compression. Au besoin, une armature incorporée reprendra les efforts de flexion locaux, si le matériau utilisé ne peut les reprendre lui-même, entre autre si le capteur solaire est autoportant dans son ensemble.

La forme des alvéoles de carter, dans lesquelles sont logés les réservoirs a une forme telle que les sollicitations de compression de l'ensemble soient les mieux réparties possibles. On peut citer à titre d'exemple une forme demi-circulaire (figure 1), une forme de porte d'église romane (figure 3), une forme de porte d'église gothique, une forme parabolique ou toutes formes intermédiaires (figures 12 et 13).

La forme des alvéoles de la figure 3 est particulièrement avantageuse, parce qu'elle présente le plus petit rapport encombrement en surface/volume de stockage en même temps que le plus petit rapport épaisseur hors tout du capteur/volume de stockage.

La distance X entre deux bords adjacents d'alvéoles (figures 1, 3, 12, 14) est fonction de la résistance à la compression du matériau utilisé pour la cuve et de celle du vitrage. Il en est de même pour la distance Y, déterminant l'épaisseur de la paroi au droit du fond de l'alvéole. Les distances X et Y conditionnent le volume de matière de carter utilisé et donc aussi en tenant compte de la densité du matériau, le poids du carter par m$^2$ de vitrage.

Dans la figure 1 on a représenté des alvéoles de carter en acier inoxydable, en aluminium ou autre matériau de faible épaisseur (verre, polyester armé de fibres de verre,...), tandis que dans la figure 3 on a utilisé un matériau de masse de faible densité, si on recherche une diminution du poids, tel que de la mousse de polyuréthane ou de la mousse de polystyrène expansée ou extrudée ou des billes de verre creuses. Dans ces derniers cas l'encombrement en surface de vitrage du capteur est fortement pénalisé.

Il est évident que dans le but de réaliser le rapport surface/volume de stockage le plus petit possible, l'épaisseur X peut être diminuée, indépendamment de l'épaisseur Y, en réalisant la paroi commune à deux alvéoles adjacentes en un matériau de plus grande résistance à la compression que le matériau utilisé pour le reste du carter (figure 12). Les formes représentées dans les figures 3, 7, 12, 14 et 15 sont meilleures que celle de la figure 1 au point de vue isolation du carter car, dans le cas de ces figures, les pertes calorifiques du carter ne se produisent qu'à travers sa paroi dorsale.

Le carter devant être étanche à l'air extérieur au capteur, si le matériau n'est pas étanche par lui-même, on place du côté extérieur de la paroi de carter une feuille étanche protégée ou non.

De même, la face côté vitrage du carter, si elle n'est pas faiblement émissive par la nature même du matériau utilisé est enduite d'un revêtement à faible émissivité (idéalement parlant $\Sigma \leqslant 0,1$).

Si les pertes de chaleur se font en partie via le recouvrement à faible émissivité de la face intérieure du carter, qui est généralement très bon conducteur de la chaleur puisque ce ne sont que les métaux qui ont une faible émissivité, il faut que l'épaisseur du recouvrement soit le plus faible possible (par exemple $\leqslant$ 10 Microns). Ceci est particulièrement important dans le cas où, les pertes relatives de chaleur par le recouvrement sont les plus importantes vis-à-vis des autres pertes (figure 14).

Ainsi, la paroi du carter peut être composée d'une double coque ou même d'une multicoque. Dans le cas de cette double ou multicoque rigide légère il est possible également, plutôt que de placer un matériau de masse, de faire le vide entre la coque intérieure et la coque extérieure, à condition qu'un entretoisement par points ou par bandes soit réalisé entre ces coques. Cet entretoisement peut, entre autres, être réalisé par la forme de la coque intérieure. De plus, il est évident que, pour améliorer les propriétés d'isolation ces deux ou multicoques ont avantage à être d'émissivité faible sur leur deux faces.

Une autre manière de réaliser le carter est de le réaliser en trois parties, à savoir:

première partie - une plaque dorsale parallèle au vitrage, soit fixée rigidement par soudure, collage ou tout autre moyen aux deux autres parties, soit simplement appliquée,

deuxième partie - un cadre périmétrique placé entre la vitre et la susdite plaque dorsale et muni soit d'un seul joint d'étanchéité sur son bord côté vitrage, si la plaque dorsale lui est attachée rigidement, soit dans le cas contraire de deux joints d'étanchéité, un sur chaque bord.

troisième partie - des longerons plats intercalaires entre alvéoles et coincés entre le vitrage et la plaque arrière sous l'action de la pression.

Au lieu de donner au carter une forme alvéolaire, la résistance à l'écrasement de l'ensemble peut être réalisée par des entretoises placées entre le vitrage et la paroi, d'une part, et entre les réservoirs et la paroi périmétrique du carter, d'autre part. Une telle réalisation a été représentée dans les figures 5 à 8, 15 et 16. Les entretoises du premier type peuvent être en métal conducteur de la chaleur pour diminuer leur section, pourvu qu'il n'y ait aucun contact entre l'absorbeur et ces entretoises, tandis que les entretoises du second type doivent avoir une excellente résistance au passage de la chaleur, étant en contact avec les réservoirs de stockage, mais elles peuvent être renforcées par un noyau métallique.

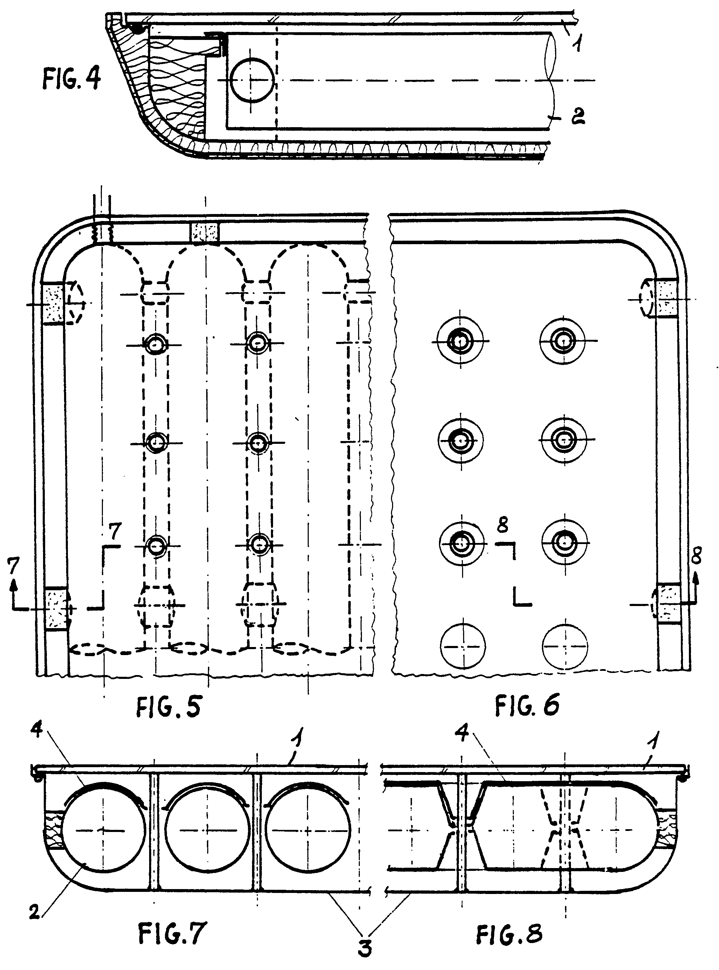

Dans le cas d'utilisation d'entretoises, l'ensemble des réservoirs de stockage peut être réalisé par deux tôles embouties à l'emplacement du passage des entretoises et à la périphérie (voir les figures 6 - 8 et les parties droites des figures 14 et 15). Les moitiés de réservoir ainsi constituées se font opposition et l'ensemble est soudé hermétiquement à la périphérie et au droit des entretoises, après y avoir perforé les trous de passage des entretoises. Le diamètre de celles-ci est plus petit que le trou de passage, de manière à ce qu'il n'y ait pas de contact entre celles-ci et l'ensemble réservoirs. C'est la face de tôle tournée vers le vitrage qui est ici absorbante.

Le diamètre des réservoirs est volontairement plus petit que le diamètre moyen de la face côté vitrage de la paroi dorsale du carter. De cette manière, le rayonnement solaire, qui ne tombe pas directement sur la face absorbante du réservoir, y arrive après avoir subi une ou plusieurs réflexions sur la face côté vitrage de ladite paroi dorsale dont l'émissivité est très faible, comme il a été dit plus haut.

Pour cela la face côté vitrage de la paroi dorsale du carter aura une forme la plus proche possible d'une surface prismatique à effet concentrateur, toute la surface extérieur du réservoir sera absorbante selective et le réservoir sera situé dans la zone foyère de ladite surface prismatique, qui pourra alors dans ce dernier cas être par exemple parabolique, semicirculaire ou semi-elliptique.

Si la section du réservoir de stockage est tellement petite qu'elle n'occupe qu'en partie la zone foyère, le réservoir de stockage est muni sur toute sa longueur de deux ailettes latérales à faces absorbantes sélectives, de telle manière que le flux d'ensoleillement passant dans la zone foyère frappe une surface absorbante soit des ailettes, soit du réservoir.

Malgré la diminution du diamètre du réservoir par rapport au diamètre de la face côté vitrage de la paroi dorsale du carter il est possible de conserver une haute densité de stockage par m² de vitrage. Il suffit d'utiliser dans les réservoirs des agents à stockage par changement de phase sélectionnés en fonction de leur température de changement de phase. On peut citer le sulfate de sodium (35°), le nitrate de sodium (53°), le nitrate de magnésium (90°), le chlorure de magnésium (115°), etc.

Un moyen de mettre en oeuvre ce système consiste à utiliser un réservoir de stockage constitué de deux tubes concentriques. Dans le tube intérieur se trouve l'agent de stockage à changement de phase. Entre le tube extérieur et le tube intérieur circule le fluide à chauffer.

Dans le cas de la figure 14, où les espaces X sont relativement importants, du fait que les matériaux isolants légers n'ont pas les plus faibles résistances à la compression, une manière de récupérer une partie de l'énergie solaire frappant la vitre au droit de l'épaisseur X est d'y placer un profilé en V inversé, de surface fortement réflective, à l'extérieur du capteur. Ceci est représenté en traits interrompus dans la partie droite de la figure 14.

Dans le but d'augmenter la distance entre les cloisons d'alvéoles ou entre les entretoises, dans le cas d'utilisation de celles-ci, sans pour cela augmenter l'épaisseur du vitrage, il est possible de placer de chant, sous le vitrage et perpendiculairement à celui-ci des lames de faible épaisseur. Ces lames, dont le matériau constitutif est de bonne résistance à la flexion, sont de hauteur suffisante pour reprendre les efforts de flexion. Pour les alléger, elles peuvent être perforées dans leur partie centrale et/ou être creuses à la manière d'un tube rectangulaire plat. Ces lames s'appuyent sur les cloisons d'alvéole ou sur les entretoises, tandis que le vitrage s'appuie et sur les cloisons d'alvéoles et sur ces lames. Les faces de ces lames sont de faible émissivité (voir dessin en traits interrompus à droite dans les figures 13 et 14).

Un capteur solaire à vide d'air suivant l'invention est avantageusement utilisé en caisson autoportant destiné à la construction pour toiture, paroi, etc. Ces caissons peuvent stocker des calories et, à la limite, on peut concevoir une construction formée essentiellement de tels caissons et n'ayant plus besoin d'aucun moyen de chauffage.

Il est évidemment essentiel que les parois perpendiculaires au vitrage, c'est-à-dire les parois communes à deux alvéoles adjacentes ou les parois périphériques du carter, soient réalisées en matériau isolant thermique, de manière à ne pas créer des ponts thermiques, ou encore que la paroi dorsale du carter soit revêtue sur sa face extérieure au caisson d'un isolant thermique.

Si, en plus, on supprime les réservoirs de stockage le caisson est un caisson isolant autoportant de grande légèreté.

Dans le cas d'utilisation en capteur autoportant destiné à la construction le capteur peut permettre la suppression des corps de chauffe dans le bâtiment. Il suffit que le fluide caloporteur, passant dans les réservoirs, soit simplement de l'air véhiculé par tirage naturel ou par tirage mécanique. Cet air est alors envoyé à l'intérieur du bâtiment suivant les principes existants des installations de chauffage par air chaud. Enfin, cet air est recyclé en tout ou en partie dans les capteurs.

Dans le cas encore d'utilisation en capteur autoportant destiné à la construction la fonction stockage peut être supprimée dans le capteur solaire proprement dit et placée uniquement dans un caisson isolant autoportant à stockage de chaleur intégré comme décrit plus haut. Dans ce cas, le transfert de chaleur du capteur au caisson stockeur de calories peut se faire par tous moyens connus, tels que pompe, thermosiphon, caloduc. Dans le cas du caloduc, il n'est généralement pas envisageable que le fluide chauffé soutiré au stockage soit le même que le fluide utilisé dans le caloduc.

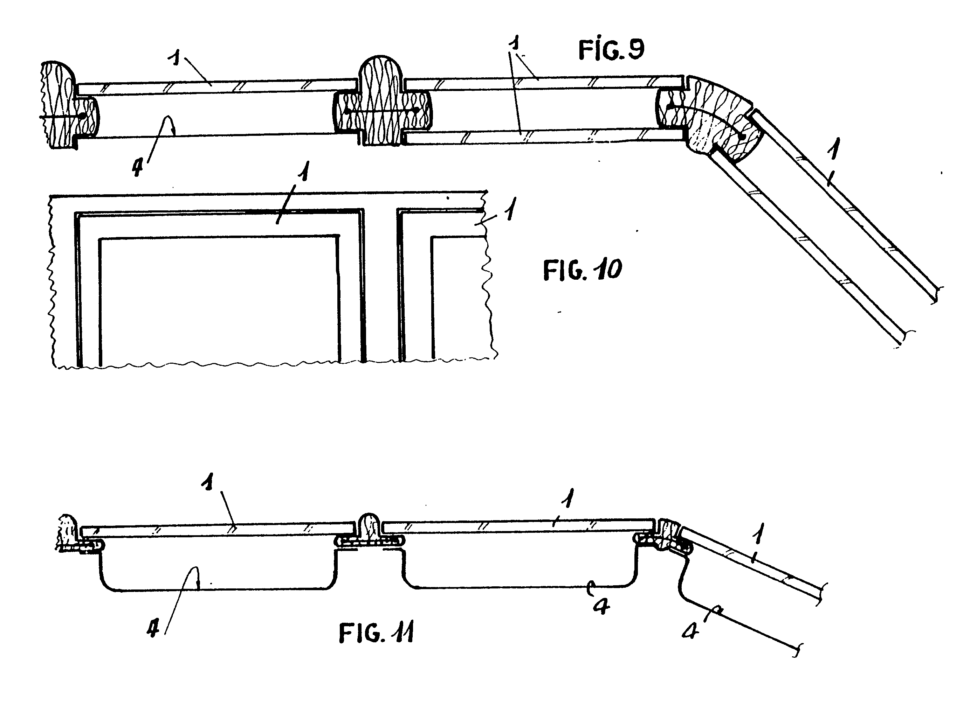

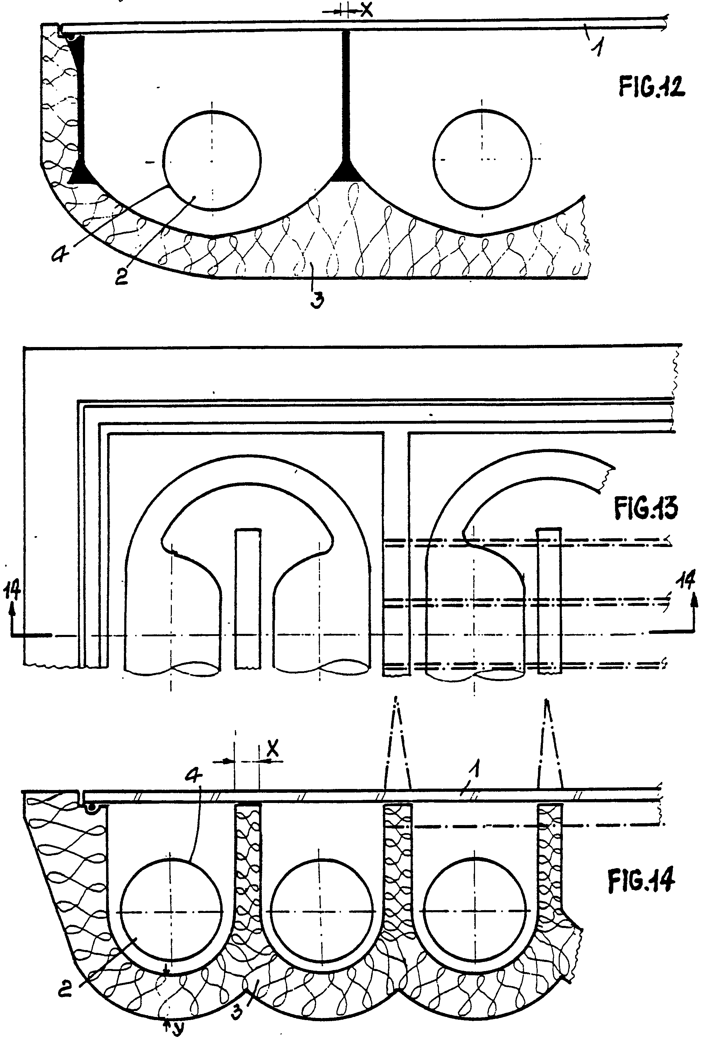

Le capteur solaire suivant l'invention peut aussi être utilisé comme caisson flottant pour piscine (figures 9, 10, 11). Dans ce cas, le réservoir accumulateur est constitué par l'eau de la piscine, le carter par la cuve de la piscine et l'absorbeur par la face côté vitrage de la paroi dorsale d'un caisson associé au vitrage, dont l'autre face est en contact avec l'eau de la piscine. C'est cette face absorbante tournée vers le vitrage, qui possède les caractéristiques de haut rendement (idéalement parlant: $\Sigma \leqslant 0,1$; $\alpha \geqslant 0,9$).

**Revendications**

1. Capteur solaire à vide d'air, comportant intégré dans un carter (3) fermé par un vitrage (1) orienté vers le soleil au moins un réservoir accumulateur de chaleur (2) isolé thermiquement de ce vitrage, caractérisé en ce que au moins la surface dirigée vers le soleil de ce ou de ces réservoirs accumulateurs (2) est sélectivement absorbante et en ce que dans ce carter (3) des moyens de support sont prévus, qui s'étendent entre le fond dudit carter (3) et le vitrage (1) formant des compartiments pour ce ou ces réservoirs accumulateurs (2).

2. Capteur solaire suivant la revendication 1, caractérisé en ce que le carter fermé est constitué, d'une part, par le vitrage (1) et, d'autre part, par un caisson associé, dont la paroi dorsale revêtue d'un absorbeur (4) constitue la paroi côté vitrage du ou des réservoirs, le caisson ainsi constitué pouvant flotter sur l'eau d'une piscine.

3. Capteur solaire suivant la revendication 1, caractérisé en ce que le ou les réservoirs (2) présentent une forme générale plate constituée par leur forme plate individuelle ou par un ensemble d'élément tubulaires, disposés parallèlement entre eux, incriptible dans un volume parallélipipédique plat.

4. Capteur solaire suivant la revendication 1, caractérisé en ce que le réservoir (2) est enveloppé par un ensemble vitrage (1) - carter (3), dont la forme est adaptée à celle du réservoir pour donner au capteur solaire une forme identique.

5. Capteur solaire suivant la revendication 1, caractérisé en ce que la résistance à l'écrasement de l'ensemble est réalisée par la forme du carter (3) constituée d'alvéoles juxtaposées, dont les parois communes étendent jusqu'au vitrage, de telle manière que les matériaux ne travaillent qu'à la compression s'ils ne reprennent que les seuls efforts d'écrasement et/ou de telle manière que les parois communes aux alvéoles sont en mesure de reprendre les efforts de flexion du capteur s'il est autoportant dans son ensemble.

6. Capteur solaire suivant la revendication 1, caractérisé en ce que le carter (3) possède un effet concentrateur du rayonnement solaire, la face interne de sa paroi dorsale ayant une forme la plus proche possible d'une surface prismatique à effet concentrateur et le réservoir (2) étant tubulaire et situé dans la zone foyère de cette surface prismatique.

7. Capteur solaire suivant la revendication 1, caractérisé en ce que la densité du stockage par m2 de surface du vitrage va en diminuant de l'entrée à la sortie du capteur, de manière à atteindre les températures les plus élevées à la sortie.

8. Capteur solaire suivant la revendication 5, caractérisé en ce que les alvéoles ont une forme donnant le plus petit rapport encombrement en surface du capteur/volume de stockage.

9. Capteur solaire suivant la revendication 1, caractérisé en ce que la paroi du carter est multicoque, entre les coques de laquelle est fait le vide ou est injecté de la mousse légère, pour avoir une bonne résistance à l'écrasement tout en conservant une grande légèreté et pour améliorer le pouvoir isolant de la paroi de carter.

10. Capteur solaire suivant la revendication 2, caractérisé en ce qu'il est constitué d'une série de capteurs alignés côté à côté et articulés entre eux à la façon de lattes de persienne, dont le mécanisme est réalisé par l'entretoisement entre paroi avant et paroi arrière de la persienne, l'entretoise étant en matériau élastique et servant à la fois d'entretoise, d'articulation et de joint d'étanchéité.

**Patentansprüche**

1. Luftleerer Sonnenkollektor, mit wenigstens einem wärmespeichernden Behälter (2), der in ein durch eine der Sonne zugewandte Verglasung (1) verschlossenes Gehäuse (3) integriert und gegen diese Verglasung wärmeisoliert ist, dadurch gekennzeichnet, daß der der Sonne zugewandte Abschnitt der Oberfläche dieses oder dieser Speicherbehälter (2) selektiv absorbierend ist, und daß in diesem Gehäuse (3) Stützmittel vorgesehen sind. die sich zwischen dem Boden des genannten Gehäuses (3) und der Verglasung (1) unter Ausbildung von Kammern für diesen oder diese Speicherbehälter (2) erstrecken.

2. Sonnenkollektor nach Anspruch 1, dadurch gekennzeichnet, daß das geschlossene Gehäuse einerseits von der Verglasung (1) und andererseits von einem angeschlossenen Kasten gebildet ist, dessen mit einem Absorber (4) beschichtete Rückenwand die verglasungsseitige Wand des oder der Behälter bildet, wobei der so gebildete Kasten auf dem Wasser eines Schwimmbeckens schwimmen kann.

3. Sonnenkollektor nach Anspruch 1, dadurch gekennzeichnet, daß der oder die Behälter (2) von flacher Gesamtform sind, die sich aus ihrer individuellen flachen Form ergibt oder von einer Gruppe zueinander parallel angeordneter rohrförmiger Bauteile gebildet und in ein flaches parallelepipedisches Volumen einbeschreibbar ist.

4. Sonnenkollektor nach Anspruch 1, dadurch gekennzeichnet, daß der Behälter (2) von einer Verglasung (1)-Gehäuse (3)-Baugruppe umschlossen ist, deren Form an die des Behälters angepaßt ist, um dem Sonnenkollektor eine identische Gestalt zu verleihen.

5. Sonnenkollektor nach Anspruch 1, dadurch gekennzeichnet, daß die Druckfestigkeit des Ganzen durch die Gestalt des Gehäuses (3) erzielt wird, das von nebeneinander angeordneten Waben gebildet ist, deren gemeinsamen Wände sich bis zur Verglasung erstrecken, derart, daß die Werkstoffe nur auf Druck beansprucht werden, wenn sie nur die Quetschbeanspruchungen allein aufnehmen und/oder derart, daß die den Waben gemeinsamen Wände die Biegungsbeanspruchungen des Kollektors aufzunehmen vermögen, wenn er als Ganzes selbsttragend ist.

6. Sonnenkollektor nach Anspruch 1, dadurch gekennzeichnet, daß das Gehäuse (3) eine die Sonnenstrahlung bündelnde Wirkung besitzt, wobei die Innenseite seiner Rückenwand eine einer prismatischen Fläche mit bündelnder Wirkung so nahe wie möglich kommende Form hat, und der Behälter (2) rohrförmig, auf seiner gesamten Außenfläche selektiv behandelt und in der Brennzone dieser prismatischen Fläche angeordnet ist.

7. Sonnenkollektor nach Anspruch I, dadurch gekennzeichnet, daß die Speicherungsdichte je m² Fläche der Verglasung vom Einlaß zum Auslaß des Kollektors hin abnimmt, derart, daß die höchsten Temperaturen am Auslaß erreicht werden.

8. Sonnenkollektor nach Anspruch 5, dadurch gekennzeichnet, daß die Waben von einer Form sind, die das kleinste Verhältnis Flächenbedarf des Kollektors/Speichervolumen ergibt.

9. Sonnenkollektor nach Anspruch 1, dadurch gekennzeichnet, daß die Wand des Gehäuses mehrschalig ist, zwischen deren Schalen das Vakuum erzeugt oder Leichtschaum eingespritzt wird, um eine gute Druckfestigkeit unter Beibehaltung eines sehr geringen Gewichts zu erzielen und das Isoliervermögen der Gehäusewand zu verbessern.

10. Sonnenkollektor nach Anspruch 2, dadurch gekennzeichnet, daß er von einer Reihe von Kollektoren gebildet ist, die nebeneinander angeordnet und nach Art von Fensterladenbrettchen miteinander gelenkig verbunden sind, deren Mechanismus durch die Verstrebung zwischen vorderer und hinterer Wand des Fensterladens verwirklicht ist, wobei die Verstrebung aus einem elastischen Werkstoff ist und gleichzeitig als Verstrebung, Gelenk und Dichtung dient.

## Claims

1. Solar collector with an air void, comprising, incorporated in a housing (3) closed by means of a glass pane (1) directed towards the sun, at least one heat accumulator reservoir (2) insulated thermally from this glass pane, characterized in that that part of the surface directed towards the sun of this accumulator reservoir or these accumulator reservoirs (2) is selectively absorbent, and in that in this housing (3) there are supporting means which extend between the bottom of the said housing (3) and the glass pane (1), forming compartments for this accumulator reservoir or these accumulator reservoirs (2).

2. Solar collector according to Claim 1, characterized in that the closed housing consists, on the one hand, of the glass pane (1) and, on the other hand, of an associated box, of which the back wall covered with an absorber (4) forms the wall on the glass-pane side of the reservoir or reservoirs, the box so formed being capable of floating on the water of a swimming-pool.

3. Solar collector according to Claim 1, characterized in that the reservoir or reservoirs (2) have a general flat shape formed by their individual flat shape or by an assembly of tubular elements arranged parallel to one another, the said assembly being inscribable within a flat parallelepipedic volume.

4. Solar collector according to Claim 1, characterized in that the reservoir (2) is surrounded by an assembly which comprises the glass pane (1) and the housing (3) and the shape of which is matched to that of the reservoir in order to give the solar collector an identical shape.

5. Solar collector according to Claim 1, characterized in that the crushing strength of the assembly as a whole is obtained as a result of the form of the housing (3) consisting of mutually adjacent cells, the common walls of which extend up to the glass pane, in such a way that the materials are subjected only to compression if they absorb only the crushing forces, and/or in such a way that the walls common to the cells are capable of absorbing the bending forces of the collector if it is self-supporting as a whole.

6. Solar collector according to Claim 1, characterized in that the housing (3) has an effect of concentrating the solar radiation, the inner face of its back wall having a form as near as possible to a prismatic surface with a concentrating effect, and the reservoir (2) being tubular, treated selectively over its entire outer surface and arranged in the focal zone of this prismatic surface.

7. Solar collector according to Claim 1, characterized in that the storage density per m² of surface of the glass pane decreases from the entrance of the collector to its exit, so as to reach the highest temperatures at the exit.

8. Solar collector according to Claim 5, characterized in that the cells have a form giving the lowest ratio between the surface bulk of the collector and the storage volume.

9. Solar collector according to Claim 1, characterized in that the wall of the housing is multi-shell, and between the shells of the said wall the void is formed or light foam is injected, in order to obtain a good crushing strength, whilst at the same time preserving great lightness, and in order to improve the insulating power of the housing wall.

10. Solar collector according to Claim 3, characterized in that it consists of a series of collectors aligned side by side and articulated to one another in the manner of blind slats, the mechanism of which is obtained as a result of the bracing between the front wall and rear wall of the blind, the brace being made of elastic material and serving at the same time as a brace, as a joint and as a sealing means.

FIG. 1

FIG. 2

FIG. 3

1

FIG. 4

FIG. 5

FIG. 6

FIG. 7

FIG. 8

FIG. 9

1

1

1

1

1

4

1

FIG. 10

1

1

1

1

FIG. 11

1

1

1

4

4

4

4

EP 0 118 453 B1

FIG.12

FIG.13

FIG.14

7

FIG.15

FIG.16

4

1

1

2

3